# EUROPEAN PATENT APPLICATION

(11) **EP 4 647 337 A1**
(43) Date of publication of application: **12.11.2025**
(21) Application number: 25173173.3
(22) Date of filing: 29.04.2025
(51) Int. Cl.: B64D 1/02

(54) **SONOBUOY CONTAINMENT AND RELEASE DEVICE**

(30) Priority: 07.05.2024 IT 202400010210
(71) Applicant: M.E.S. S.p.A., 00131 Roma (IT)
(72) Inventor: LOMBARDI, Stefano, 00060 Sacrofano (Roma) (IT)
(74) Representative: Penza, Giancarlo

(57) **Abstract**

Device 1 for containing and releasing sonobuoys 10, comprising a carousel rotatable about a respective axis X of longitudinal extension and having a lower portion 4 and an upper portion 5, each of which endowed with a plurality of seats 3 for housing respective sonobuoys 10; each seat 3 comprising a support system 7 for supporting the sonobuoy 10 from below; characterised in that each seat 3 further comprises a plurality of retaining elements 15, each of which switchable between a configuration of laterally retaining a respective sonobuoy 10, wherein it defines in the seat 3 a housing volume 12 for the sonobuoy 10, and a configuration of access to the seat 3 in order to house the sonobuoy 10 in the seat 3.

## Description

The present invention relates to a device for containing and releasing sonobuoys.

More particularly, the present invention relates to a device adapted to be mounted on an aircraft and capable of containing and releasing sonobuoys of different lengths into the sea.

Generally, such sonobuoys, which have a cylindrical shape with a circular cross section, are released by the device and made to pass under gravity through an expulsion opening obtained on the aircraft.

As is well known, the devices mostly consist of rotating drums, also known by the term "carousels", defining suitable seats for housing the sonobuoys on their respective outer cylindrical surface.

To this end, each housing seat extends parallel to the axis of longitudinal extension of the drum, i.e. the rotation axis of the entire device.

Disposed inside each seat there is a retaining member for retaining the respective sonobuoy, generally consisting of a pair of elements placed in contact with the upper and lower surfaces of the sonobuoy, respectively. The lower element determines the launch of the sonobuoy, being able to switch into a configuration in which it is retracted and detached from the lower surface of the sonobuoy. The upper element, on the other hand, is advantageously movable away from/towards the lower element so that it can be adapted to the length of the sonobuoy.

The known devices are thus suitable for containing cylindrical sonobuoys of different lengths, all contained within the longitudinal extent of the respective seat.

However, this type of rotating drums has a limit in the capacity of containing sonobuoys. In fact, the rotating drum peripherally has a limited number of seats, corresponding to the total number of sonobuoys that can be housed.

Consequently, in order to maintain the overall dimensions contained within the aircraft, devices are made which are not particularly voluminous and thus have an extremely limited number of seats.

In order to resolve this drawback, solutions are also proposed in which the retaining members are capable of separating every seat into two parts in order to contain two small or medium-sized sonobuoys in said seat.

In other words, the drum is "split in two" to double the possibility of loading sonobuoys having more modest dimensions.

In this solution, illustrated for example in the United States publication US4397433, every sonobuoy housing seat comprises a pair of elements placed in an upper area of the drum and a pair of elements placed in a lower area of the drum near the aforementioned expulsion opening.

However, even this type of device is not free of drawbacks.

It should be noted, in particular, that during transport, the need may arise to have a sonobuoy retaining system that is safer and more efficient, also in the presence of a large number of sonobuoys.

It should be noted, in fact, that during transport on the aircraft, sonobuoys are subjected to continuous vibrations and misalignments deriving from the manoeuvres of the aircraft themselves during flight.

In this context, the sonobuoys can move inside the respective seat and come out partly from the seat itself, with the consequent disadvantages in terms of safety and the correct expulsion from the opening obtained in the aircraft.

It should further be noted that the openings have diameter sizes compatible with the size of the sonobuoys, such as to favour the expulsion of the sonobuoy only if correctly aligned with the opening.

It should also be pointed out that the expulsion of the sonobuoys takes place after the rotation of the device in such a way as to progressively align the sonobuoys to be released with the opening obtained in the aircraft.

However, this rotation of the device generally always takes place along the same direction of rotation (clockwise or anticlockwise), thus slowing the sonobuoy release process.

In other words, the device can contain the sonobuoy to be released in proximity to the opening, but in the wrong direction relative to the direction of rotation (e.g. clockwise) imposed on the device to reach the opening. This implies a considerable drawback in terms of efficiency and sonobuoy release times.

In this context, the technical task at the basis of the present invention is to propose a device for containing and releasing sonobuoys which overcomes the abovementioned drawbacks of the prior art.

In particular, it is an object of the present invention to provide a device for containing and releasing sonobuoys that is capable of containing a large number of sonobuoys, without increasing the overall dimensions of the device itself, and is at the same time capable of correctly retaining each sonobuoy in position.

In greater detail, one object of the present invention is to provide systems for retaining and releasing the individual sonobuoy which are efficient and thus capable of avoiding misalignments of each sonobuoy, even following considerable vibrations and shifts deriving from the aircraft on which the device is mounted.

Another object of the present invention is to provide a versatile device able to contain sonobuoys of different sizes.

It is a further object of the present invention to provide a device capable of optimising the process of selecting and launching each sonobuoy.

These and other objects are achieved by a device for containing and releasing sonobuoys comprising the technical features disclosed in one or more of the appended claims.

In particular, the device of the invention comprises a carousel rotatable about a respective axis of longitudinal extension and having a lower portion and an upper portion, each of which endowed with a plurality of seats for housing respective sonobuoys; each seat comprising a support system for supporting the sonobuoy from below; each seat further comprises a plurality of retaining elements, each of which switchable between a configuration of laterally retaining a respective sonobuoy, wherein it defines in said seat a housing volume for the sonobuoy, and a configuration of access to the seat in order to house the sonobuoy in said seat.

Such retaining elements thus allow the sonobuoy to be laterally retained inside the aforesaid housing volume defined in the seat, avoiding any misalignments of the sonobuoy itself.

In a further aspect, the invention relates to a method for containing and releasing sonobuoys, comprising the step of providing a rotatable carousel having a lower portion and an upper portion, each of which endowed with a plurality of seats for housing respective sonobuoys; there is subsequently provided, for each seat, a plurality of retaining elements switchable between a retaining configuration and an access configuration; said retaining elements are then positioned in the configuration of access to the seat in order to house a sonobuoy in said seat; subsequently, the sonobuoy is housed in said seat, supported from below by means of a support system; finally, said retaining elements are switched into the retaining configuration in order to laterally retain the sonobuoy inside a housing volume of the seat.

Additional features and advantages of the present invention will emerge more clearly from the approximate and thus non-limiting description of a preferred embodiment of a device for containing and releasing sonobuoys. The description will be set forth here below with reference to the appended drawings, provided solely for illustrative and thus non-limiting purposes, in which:
- figure 1 shows a perspective view of a device for containing and releasing sonobuoys, in accordance with the present invention;
- figure 2 shows the device in figure 1 with some sonobuoys housed in the respective seats;
- figures 3A - 3C show enlargements of a first constructive detail of the device in figure 1 in respective operating configurations;
- figures 4A and 4B show enlargements of a second detail of the device in figure 1 in accordance with a first embodiment and in respective operating configurations;
- figures 4C and 4D show enlargements of a second detail of the device in figure 1 in accordance with a second embodiment and in respective operating configurations;
- figures 5A and 5B show enlargements of a third detail of the device in figure 1 in accordance with a first embodiment and in respective operating configurations;
- figures 5C and 5D show enlargements of a third detail of the device in figure 1 in accordance with a second embodiment and in respective operating configurations;
- figure 6 shows an enlargement of an upper portion of the device in accordance with the present invention;
- figure 7 shows a side elevation view of the device according to the present invention and in a respective step of inserting a sonobuoy.
- figure 8 is a block diagram of the functions of the processing unit.

With reference to the abovementioned figures, the reference number 1 denotes in its entirety a device for containing and releasing sonobuoys 10. More particularly, the device 1 is suitable for operating in accordance with a method for containing and releasing sonobuoys 10, to which the present invention also relates, for containing the sonobuoys during transport on aircraft and controlling the release thereof.

The device 1 comprises a carousel rotatable about a respective longitudinal axis X.

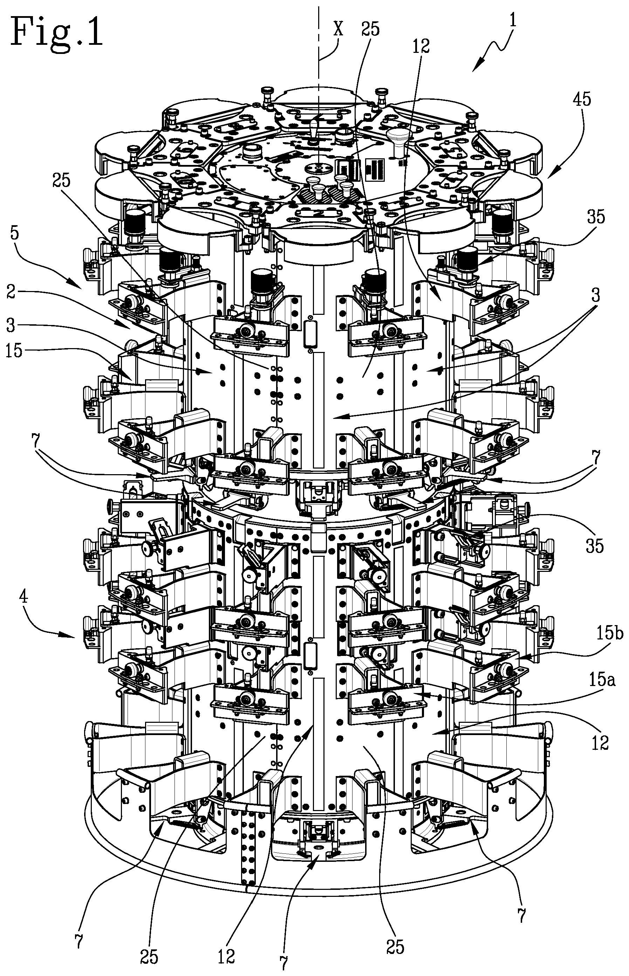

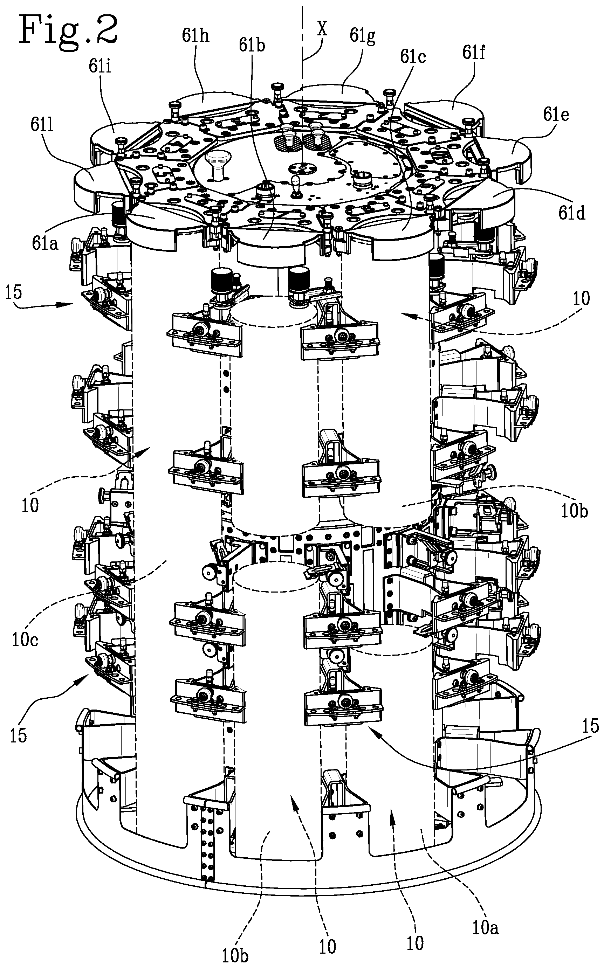

As is better illustrated in figures 1 and 2, the carousel comprises a central body 2 endowed with an outer surface. The outer surface is substantially cylindrical and a plurality of housing seats 3 are obtained thereon, partially counter-shaped to the outer surface of the respective sonobuoys 10.

The carousel has a lower portion 4 and an upper portion 5, each of which endowed with a plurality of seats 3 for housing respective sonobuoys. In particular, the lower portion 4 extends from a plane in which the base of the carousel lies to a midplane parallel to the base plane, whereas the upper portion 5 extends from the midplane to a plane in which the top of the carousel lies.

In other words, the lower portion 4 and upper portion 5 are contiguous and overlapping along the aforesaid longitudinal axis X.

In one embodiment shown purely by way of non-limiting example in figure 1, there are ten housing seats 3 per portion 4, 5.

However, the number of housing seats 3 can be any whatsoever as a function of the various needs for containing the sonobuoys 10.

Each seat 3 comprises a plurality of retaining elements 15, each of which switchable between a configuration of laterally retaining a respective sonobuoy 10, wherein it defines in the seat 3 a housing volume 12 for the sonobuoy 10, and a configuration of access to the seat 3 in order to house the sonobuoy 10 in the seat 3 itself.

It should be specified that the term "lateral" means the retainment of the sonobuoy 3 on the cylindrical outer surface. In other words, the sonobuoy is retained inside the seat 3 by means of an action of compression in a radial direction with respect to the longitudinal axis X.

For example, each seat 3 can comprise at least a pair of retaining elements 15a, 15b adapted to retain the sonobuoy 10 in position. In this manner, the device 1, and in particular the retaining elements 15, improves the ability to retain the sonobuoys 10 even in the presence of any misalignments of the sonobuoy 10 due to vibrations and/or manoeuvres of the aircraft.

Furthermore, each pair of retaining elements 15a and 15b guides the sonobuoy 10 in the expulsion thereof along a direction parallel to the longitudinal axis X of the carousel. In this manner, the sonobuoy 10 can be moved from the upper portion 5 to the lower portion 4 and/or be correctly released by the device 1 in a safe and effective manner.

Each retaining element 15 is interposed between two adjacent seats 3. As is better shown in figures 1-2 and 7, each retaining element 15 is structured so as to retain two sonobuoys 10 positioned in adjacent seats 3 of the carousel, in order to provide retaining elements 15 that are symmetrical and simple to produce.

The retaining element 15 comprises a bracket 16 extending radially from the outer surface of the central body 2.

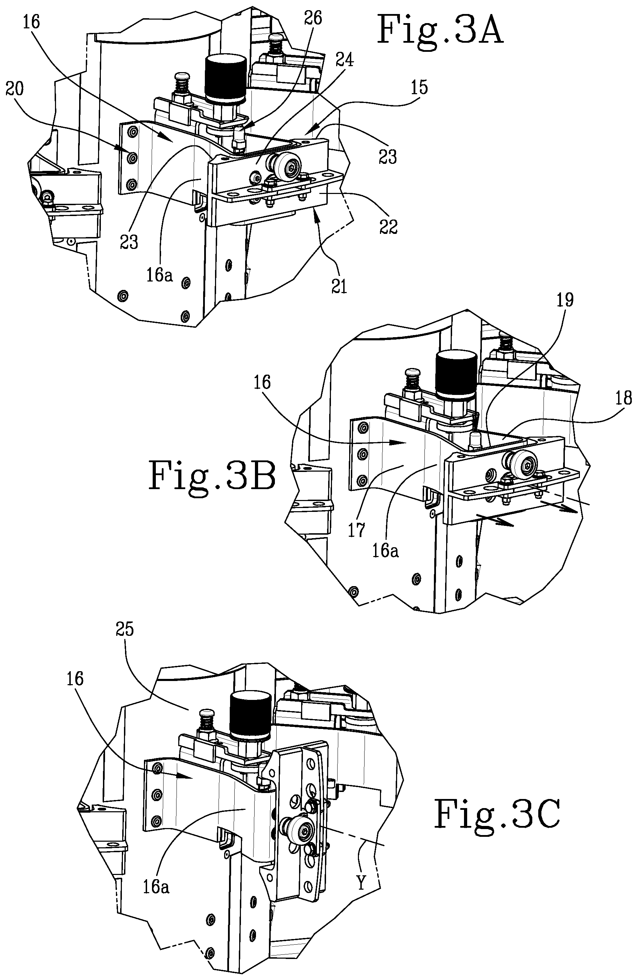

As is better illustrated in figures 3A - 3C, the bracket 16 comprises respective opposing surfaces 16a, each of which defines a respective containment volume of two adjacent seats 3. Every opposing surface 16a preferably has a curved conformation so as to be at least partially counter-shaped to the outer surface of the sonobuoy 10. In this manner, the stabilisation of the sonobuoy 10 in the respective housing seat 3 is improved.

Again making reference to figures 3A - 3C, the bracket 16 comprises at least a first portion 17 and a second portion 18 diverging from each other away from the central body 2 and connected to each other by an intermediate portion 19.

Said portions 17 and 18 of the bracket 16 comprise the respective opposing surfaces 16a.

The intermediate portion 19 has a main extent that is preferably transverse to the main extent of the first portion 17 and second portion 18. The first portion 17 and second portion 18 of the bracket 16 have a respective end rigidly connected to the central body 2 of the carousel through connection means 20, whereas the intermediate portion 19 of the bracket is in a distal position with respect to the central body 2 of the carousel.

As mentioned above, the first portion 17 and second portion 18 comprise respective opposing surfaces 16a facing adjacent seats 3 and define, in collaboration with the aforesaid seats, a respective housing volume 12. The retaining element 15 also comprises a movable portion 21, rotatable about an axis Y transverse to the longitudinal axis X of the carousel in order to define the retaining and access configurations of the retaining element 15 itself.

The movable portion 21 is rotatably associated with one end of the bracket 16 which is distal from the outer surface 2. In particular, the movable portion 21 is rotatable about the axis Y which extends radially with respect to the axis X.

Again making reference to figures 3A - 3C, the movable portion 21 is rotatably associated with the intermediate portion 19 of the bracket 16. In this manner, when a sonobuoy 10 is inserted into a seat 3 adjacent to a seat already occupied by a previously inserted sonobuoy, the bracket 16 will not undergo structural variations and the rotation of the movable portion 21 alone will not influence the stability of the sonobuoys 10 already present in the adjacent seats 3.

The movable portion 21 comprises a bar 22 having a pair of contact surfaces 23 located at the ends of the bar 22 itself and facing towards the central body 2 of the carousel. The contact surfaces 23 are curved so as to be at least partially counter-shaped to the outer surface of the sonobuoy 10.

In other words, two contact surfaces 23, the first portion 17 and second portion 18 of a pair of retaining elements 15a and 15b collaborate with the seat 3 to define the housing volume 12 for a sonobuoy 10. Advantageously, the two curved contact surfaces 23 generate an increase in the surface of contact with the sonobuoy 10 and thus a greater stability of the latter in the respective seat 3, thereby increasing the efficiency of the device 1 during transport in aircraft.

The contact surfaces 23, in the lateral retaining configuration, are abuttable against respective outer surfaces of the sonobuoys 10 disposed in the two adjacent seats 3, and in the access configuration they are facing a zone 25 interposed between the two adjacent seats 3.

Preferably, the movable portion 21 comprises an intermediate portion 24, interposed between the two contact surfaces 23 and counter-shaped to the distal end of the bracket 16, and in particular counter-shaped to the intermediate portion 19.

The retaining element 15 comprises a blocking element 26 (figures 3A -3C) which controls the rotation of the movable portion 21 with respect to the bracket 16. In particular, the blocking element 26 allows the movable portion 21 to be switched from a retaining configuration to an access configuration, wherein the movable portion 21 is free to rotate about the transverse axis Y. Even more particularly, the blocking element 26 is configured to allow the distancing (figure 3B) of the movable portion 21 from the bracket 16, preferably from the intermediate portion 19, and the rotation (figure 3C) of the movable portion 21 itself into an access configuration. Preferably, the rotation of the movable portion 21 determines an opening of the housing seat 3 such as to favour the insertion of the sonobuoy 10.

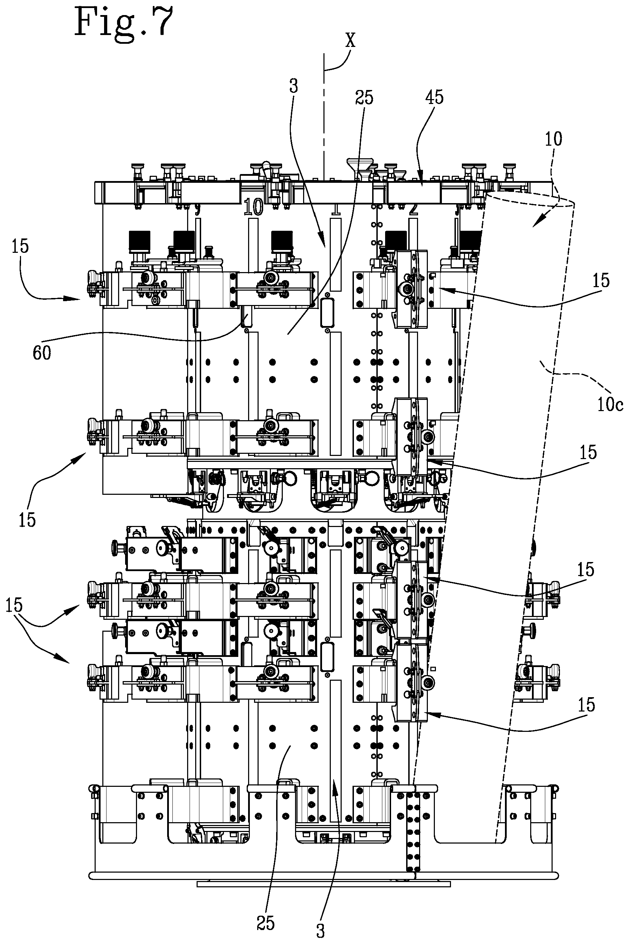

In order to allow the insertion of the sonobuoy 10, the contact surfaces 23, in the access condition, are positioned in a zone 25 interposed between the seats 3 and external to the housing volume 12 (figures 3C and 7).

In the retaining condition, the contact surfaces 23 of the movable portion 21 are facing the outer surface of the central body 2 and, in collaboration with the outer surface, define the housing volume 12. In this condition, the movable portions 21 and the brackets 16 of the two elements 15 are abuttable on opposite sides of the sonobuoy 10 (figure 2). Each housing seat 3 is spaced from the adjacent seat 3 by the aforesaid interposed zone 25.

Figure 2 shows sonobuoys 10 of different lengths housed in the seats 3 of the device 1 as described above.

The sonobuoys 10 can be of different sizes; specifically, sonobuoys 10a having smaller dimensions than the longitudinal extent of a portion 4, 5 of the carousel are defined as "short", sonobuoys 10c having larger dimensions than the longitudinal extent of a portion 4, 5 of the carousel as "long" and sonobuoys 10b having intermediate dimensions as "medium-sized".

From figure 2 it is evident that short sonobuoys 10a are retained by a pair of retaining elements 15a, 15b and medium-sized sonobuoys 10b by two pairs of retaining elements 15a, 15b, whilst long sonobuoys 10c require four pairs of retaining elements 15a, 15b.

Each seat 3 further comprises a support system 7 for supporting the sonobuoy 10 from below.

The support system 7 is positioned at the lower end of each portion 4, 5 of the carousel.

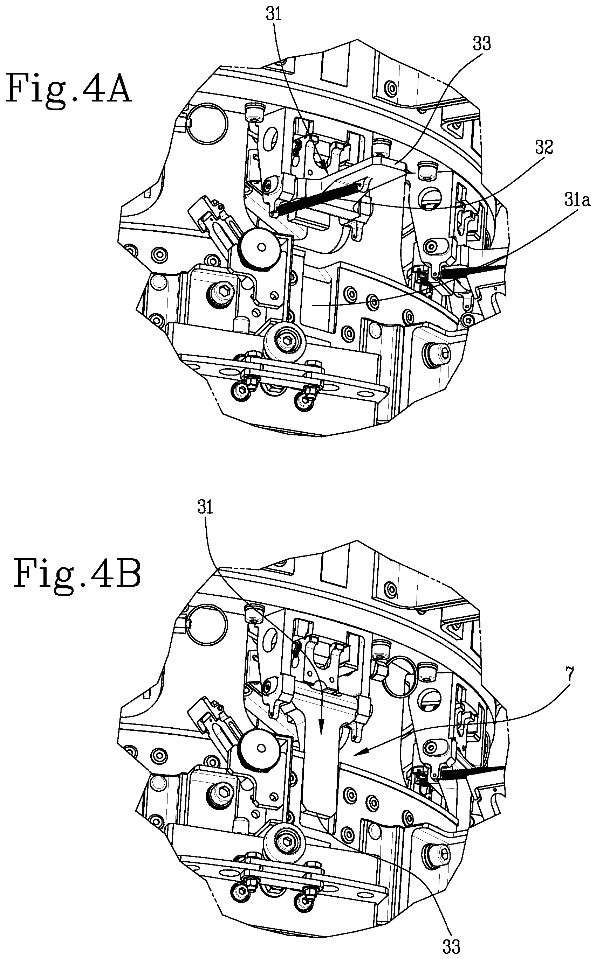

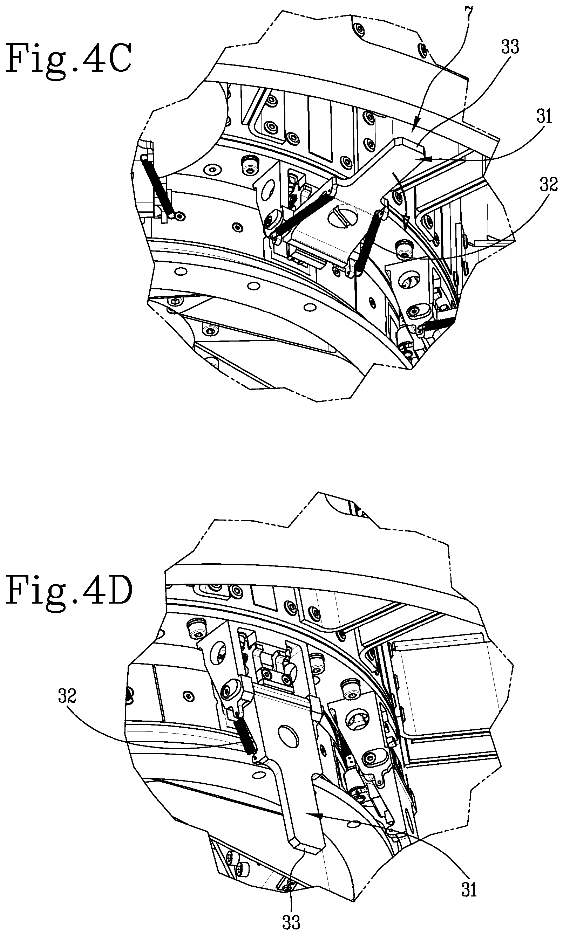

With reference to figures 4A - 4D, the support system 7 comprises a projecting support member 31 movable between a use condition, in which it projects transversely from the carousel (figures 4A and 4C) to support the respective sonobuoy 10, and a release condition (figures 4B and 4D), in which it is retracted outside the housing volume 12.

The support system 7 comprises at least one spring 32 (preferably two springs) located below the projecting support member 31 and which connects the projecting support member 31 to the carousel. In the use condition, the spring 32 allows the projecting support member 31 to be positioned transversely to the carousel in order to support the sonobuoy 10 (figures 4A and 4C). In other words, the free end 33 of the projecting support member is distal from the outer surface of the carousel and provides an upper flat surface of the projecting support member on which to rest the sonobuoy 10. In this manner, the sonobuoy 10 has an ample, stable rest surface.

In the release condition, the projecting support member 31 is in the retracted configuration. In this configuration, the free end 33 of the projecting support member is in proximity to the carousel. In this manner, an opening is generated in the lower part of the seat 3 which is sufficient to allow the sonobuoy 10 to fall under gravity.

Figure 4B shows a non-limiting example of the support system 7 of the upper portion 5 of the carousel in the release configuration. In particular, the projecting support member 31 is housed in a housing seat 31a therefor obtained in the upper part of the lower portion 4 of the carousel.

Each seat 3 comprises at least one upper support system 35 abuttable against an upper end of the sonobuoy 10 in order to retain the sonobuoy 10 itself against the support system 7 positioned below each portion 4, 5. In particular, the upper support system 35 can be positioned at different heights to abut sonobuoys 10 of different length (10a, 10b, 10c) and to hold the sonobuoy 10 itself in the seat 3.

In an alternative embodiment, not illustrated, the upper support system 35 can comprise guide elements for guiding and translating the system itself parallel to the direction of the longitudinal axis X so as to adapt to the different types of sonobuoys 10.

As is evident from figures 1, 2 and 7, the upper support system 35 is positioned above the retaining element 15.

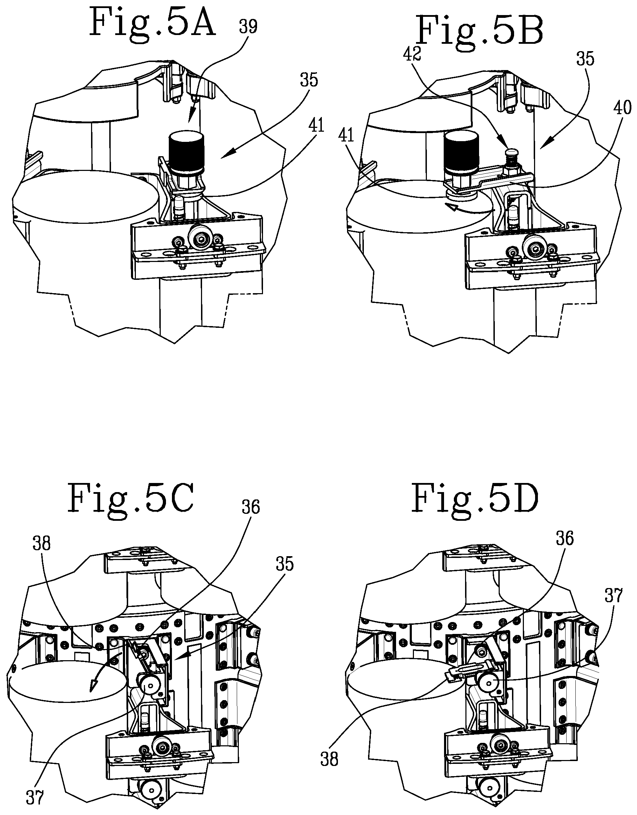

In one embodiment, shown in figures 5C and 5D, the upper support system 35 comprises an abutment element 36 and a blocking element 37. The abutment element 36 is rotatable so as to be abutted, when in use, in contact with the sonobuoy 10. The blocking element 37 constrains the abutment element 36 in contact with the sonobuoy 10.

As shown in figure 5C, the abutment element 36 is constrained to a support extending radially from the central body 2 of the carousel. The support has a cylindrical structure that allows the abutment element 36 to rotate about the rotation axis of the support itself. In other words, the abutment element 36 is rotatable with respect to the transverse axis Y. The abutment element 36 has a free portion 38 in a position distal from the support and which is placed in contact with the upper surface of the sonobuoy 10. The blocking element 37 is configured to control the rotation of the abutment element 36 about the support, in a manner which is known and thus not described in detail.

Each seat 3 of the lower portion 4 of the carousel comprises at least one abutment element 36 and a respective blocking element 37.

Making reference to figures 1 and 2, each seat 3 of the lower portion 4 of the carousel comprises two abutment elements 36 and the respective blocking elements 37 distributed along the longitudinal extension of the seat 3 and positioned at heights consistent with the dimensions of the short sonobuoys 10a and medium-sized sonobuoys 10b.

In one embodiment, not shown, the abutment element 36 and the respective blocking element 37 can also be positioned in the upper portion 5 of the carousel.

In an alternative and preferred embodiment, shown in figures 5A and 5B, the upper support system 35 is a pressure system 39, positioned laterally to each seat 3, and rotatable so as to be in contact from above with the sonobuoy 10.

The pressure system 39 comprises a support 40 extending from the outer surface 2 of the central body of the carousel and rotatable about an axis parallel to the longitudinal axis X of the carousel. In this manner, the support 40 is abutted, by means of a planar structure 41, on top of the sonobuoy 10. The planar structure 41 is controlled by means of a control element 42 so as to be placed, when in use (figure 5B), in contact with the upper surface of the sonobuoy 10. In this manner, the pressure system 39 exerts a pressure on the sonobuoy such as to retain it in the seat 3 in collaboration with the respective support system 7.

It is evident from figure 2 that the pressure system 39 is positioned in the upper portion 5 of the carousel in order to retain the sonobuoys of small dimensions 10a against the support system 7.

In a possible alternative embodiment, not shown, the pressure system 39 is positioned at the upper end of the upper portion 5 of the carousel, in order also to retain medium-sized sonobuoys 10b and long sonobuoys 10c.

In one embodiment, not shown, the pressure system 39 can also be positioned in the lower portion 4 of the carousel.

The device 1 further comprises an auxiliary upper support system 45, connected to the upper end of the carousel, to hold the sonobuoy 10 in position. Advantageously, the auxiliary upper support system 45 further supports the sonobuoy 10, thus more effectively reducing the misalignments of the sonobuoy 10 caused by vibrations.

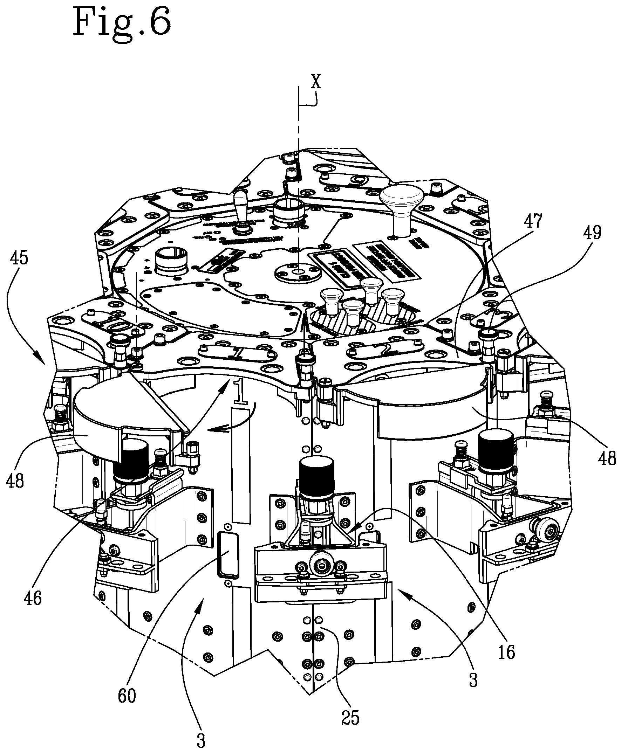

The auxiliary system 45 comprises a support element 46 and a closure element 49. The support element 46 is a hollow structure, counter-shaped to the upper end of the sonobuoy 10, and projecting from the carousel, and it is switchable between an open condition (figure 6), so as to insert the sonobuoy in the respective seat 3, and a closed condition, so as to retain the sonobuoy in said housing volume 12.

Also shown in figure 6 is the support element 46, which comprises a fixed portion 47 connected directly to the device 1 and a movable portion 48 connected to the fixed portion 47 by means of at least two connection elements. The movable portion 48 has a preferably semicircular shape and has two housing seats in which to house the connection elements. In particular, the movable portion 48 has housing seats for the connection elements positioned in the two diametrically opposite portions of the semicircle. In particular, a first connection element is substantially a pin and enables the rotation of the movable portion 48 about the rotation axis thereof; a second connection element is a closure element 49 extractable from the respective housing seat to enable the rotation of the movable portion 48.

The device 1 contains a plurality of sensors 60, preferably laser sensors, distributed in each portion 4,5 of the containment carousel in order to send input data representative of the presence and of the type (e.g. size) of the sonobuoy 10 in the respective seat 3.

The plurality of sensors 60 sends further input data representative of the position of the sonobuoy 10 relative to the expulsion opening present on the aircraft.

Advantageously, the plurality of sensors 60 makes it possible to have a constant and automatic monitoring and mapping of the plurality of sonobuoys 10 positioned on the device 1.

The device 1 comprises an interface element (not shown) configured to select a sector 61a - 611 of carousel. In particular, the sector 61a-61l comprises a seat 3 of the lower portion 4 and the respective seat 3 of the upper portion 5.

The device 1 further comprises a processing unit which can control the configurations of the retaining elements 15, of the support system 7, of the upper support system 35, and of the auxiliary upper support system 45. The processing unit is further configured to control the rotation of the carousel as a function of the input data sent by the sensors 60 and to control the sonobuoy 10 to be released.

The device 1 in accordance with the present invention can contain different combinations of sonobuoys 10; in particular, it can contain:
- At most ten long sonobuoys 10c;
- At most ten short sonobuoys 10a and medium-sized sonobuoys 10b in each portion 4, 5;
- Long sonobuoys 10c, medium-sized sonobuoys 10b and short sonobuoys 10a (as illustrated by way of example in figure 2).

The device 1 as described can contain the long sonobuoy 10c by engaging two seats 3 belonging to different portions (e.g. lower 4 and upper 5) of the carousel. In other words, the long sonobuoy 10c occupies an entire sector 61a-61l of the carousel.

In a non-limiting example represented in figure 7, the insertion of a long sonobuoy 10c onto the device 1 is shown.

The present invention, described above in a mainly structural sense, further comprises a method for containing and releasing sonobuoys 10.

The method comprises the step of providing the rotatable carousel having the lower portion 4 and upper portion 5, each of which endowed with a plurality of seats 3 for housing respective sonobuoys 10.

The method further comprises the step of providing, for each seat 3, a plurality of retaining elements 15 switchable between a retaining configuration and an access configuration.

In order to bring about the opening for access of the sonobuoy, the retaining elements 15 are switched into the configuration of access to the seat 3 in order to house a sonobuoy 10 in the respective seat 3.

With reference to figure 7, it may be noted that four pairs of retaining elements 15a, 15b (two pairs of retaining elements 15a, 15b belonging to a seat 3 of the lower portion 4 and two pairs of elements 15a, 15b belonging to the respective seat 3 of the upper portion 5) have been switched into the access configuration in order to house the long sonobuoy 10c.

In order to insert the short sonobuoy 10a, by contrast, it is sufficient to switch a pair of retaining elements 15a, 15b, whereas for the medium-sized sonobuoy 10b, two pairs 15a, 15b are used.

In this configuration, the method provides for housing the sonobuoy 10 in the seat 3, supporting it from below by means of a support system 7.

In particular, the sonobuoy 10 is brought near to the device 1 with an inclination relative to the axis X preferably comprised between 8° and 12° so as to place the lower surface of the sonobuoy 10 in contact with the upper surface of the projecting support member 31 of the support system 7.

At this point, the sonobuoy 10 is aligned vertically with the longitudinal axis X.

Following the step of housing the sonobuoy 10, the sonobuoy 10 is supported from above by means of a support system 35 or by means of an auxiliary support system 45.

In particular, the short sonobuoy 10a housed in the upper portion 5 and the short sonobuoy 10a or medium-sized sonobuoy 10b housed in the lower portion 4 are supported by the support system 7. The medium-sized sonobuoy 10b, housed in the upper portion 5, or the long sonobuoy 10a are instead supported by the auxiliary support system 45.

The method also comprises a step of switching the retaining elements 15 into the retaining configuration in order to laterally retain the sonobuoy 10 inside a housing volume 12 of the seat 3.

In this manner, the contact surfaces 23 are abutted against the outer cylindrical surface of the respective sonobuoy 10 to laterally stabilise the sonobuoy, which is resting both against the aforesaid contact surfaces 23 and the opposing surfaces 16a. Moreover, in this situation, the surface of the sonobuoy turned towards the central body 2 is resting against the outer surface of the body 2 itself.

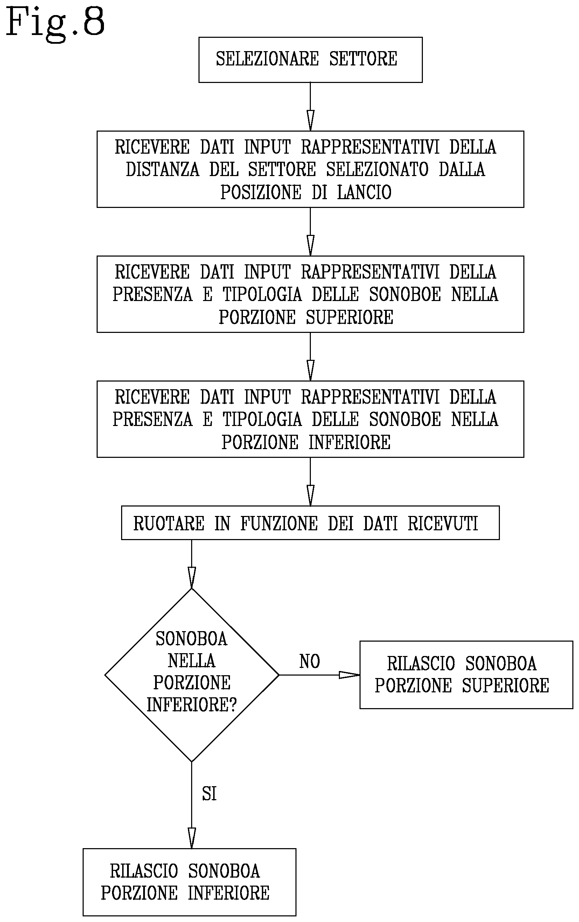

In order to release the sonobuoy, the method (schematically illustrated in figure 8) comprises the steps of: selecting a sector 61a - 611 of the carousel by means of an interface element (not illustrated or described, being of a known type); sending to a processing unit data representative of the presence and of the type of sonobuoy 10 in the respective seat 3 by means of the sensors 60 distributed in each portion 4, 5 of the carousel.

In particular, the method comprises the step of receiving a first input data item representative of the presence and of the type of sonobuoy 10 in the respective seat 3 of the lower portion 4 of the selected sector 61a - 61l.

At this point, a comparison is performed, by means of the processing unit (similarly of a known type and not described or illustrated in detail), between a first input data item and at least one predefined value.

If the presence of a sonobuoy 10 is detected in the lower portion 4, the device 1 can release the sonobuoy 10.

In particular, the method comprises the step of rotating the carousel to align the sonobuoy 10 with a launch position in the event of conformity of the first input data item with respect to the predefined value and disabling, accordingly, the support system 7 of the lower portion 4 of the selected sector 61a- 611 to release, by dropping, the sonobuoy 10 housed in the lower portion 4.

In this manner, following the step of selecting the sector 61a- 611 of the carousel, the sonobuoy 10 situated in the lower portion 4 is released by the device 1 and expelled from the aircraft.

The rotation of the carousel is actuated as a function of a signal processed by means of the processing unit and representative of the shortest rotation path the carousel must travel to position the selected sector 61a - 611 in the launch position.

In particular, the processed signal is representative of the minimum distance between a selected sector 61a - 611 and the expulsion opening as a function of the inputs received from sensors representative of the distance of the selected sector 61a - 611 from the launch position.

In this manner, the device 1 aligns the sonobuoy 10 with a launch position of the aircraft, optimising the direction of rotation of the carousel, i.e. causing the rotation to take place as a function of the shortest path for reaching the launch position.

Advantageously, the sonobuoy 10, present in the selected sector 61a - 611, reaches the aircraft launch position in as little time as possible to favour the expulsion of the sonobuoy 10.

If the sensors 60 of the lower portion 4 do not detect the presence of a sonobuoy 10, a second input data item representative of the presence and of the type of sonobuoy 10 in the respective seat 3 of the upper portion 5 of the selected sector 61a -611 is received.

At this point, the method comprises the step of performing a comparison, by means of the processing unit, between the second input data item and at least one predefined value and, in the event of conformity, of rotating the carousel to align the sonobuoy 10 with the launch position.

After the step of rotating, the support system 7 of the upper portion 5 of the selected sector 61a - 61l is disabled to release, by dropping, the sonobuoy 10 housed in the upper portion 5.

**In** other words, after the step of selecting the sector 61a - 611 and in a condition wherein the sonobuoy 10 is absent from the respective seat 3 of the lower portion 4, the sonobuoy 10 of the upper portion 5 is released by the device 1 and expelled from the aircraft.

Advantageously, the present invention resolves the aforementioned drawbacks in the prior art and achieves the intended objects.

**In** particular, the device 1 for containing and releasing sonobuoys 10 is capable of containing a large number of sonobuoys by exploiting the presence of the two overlapping portions 4, 5 of the carousel.

**In** this manner, the overall dimensions of the device 1 itself are maintained, thus limiting the volume of the device 1 inside the aircraft. Furthermore, the device 1 allows each sonobuoy 10 to be retained correctly in position.

**In** greater detail, the elements for retaining and releasing the individual sonobuoy are particularly efficient, in that they are capable of preventing misalignments of each sonobuoy, even following considerable vibrations and shifts deriving from the aircraft on which the device 1 is mounted.

A further important advantage of the invention derives from the versatility of the device 1, which is capable of containing sonobuoys 10 of different dimensions.

Finally, in accordance with the method for releasing the sonobuoys 10, the device 1 allows for optimising the process of selecting and launching each sonobuoy 10 by means of a rotation determined as a function of the shortest path that the carousel must complete to position the selected sonobuoy 10 in the launch position.

## Claims

1. Device (1) for containing and releasing sonobuoys (10), comprising a carousel rotatable about a respective axis (X) of longitudinal extension and having a lower portion (4) and an upper portion (5), each of which endowed with a plurality of seats (3) for housing respective sonobuoys;
each seat (3) comprising a support system (7) for supporting the sonobuoy (10) from below;
**characterised in that** each seat (3) further comprises a plurality of retaining elements (15), each of which switchable between a laterally retaining configuration of a respective sonobuoy (10), wherein it defines in said seat (3) a housing volume (12) for the sonobuoy (10), and a access to the seat (3) in order to house the sonobuoy (10) in said seat (3).

2. Device (1) for containing and releasing according to the preceding claim, wherein each retaining element (15) is interposed between two adjacent seats (3); said element (15) comprising a movable portion (21), rotatable about an axis (Y) transverse to the longitudinal axis (X) of the carousel in order to define said configurations.

3. Device (1) according to the preceding claim, wherein said movable portion (21) comprises a bar (22) having a pair of contact surfaces (23) located at the ends of the bar (22) itself; in the retaining configuration said surfaces (23) being abuttable against respective outer surfaces of the sonobuoys (10) disposed in the two adjacent seats (3), and in the access configuration facing a zone (25) interposed between the two adjacent seats (3).

4. Device (1) according to the preceding claim, wherein said carousel comprises a central body (2) endowed with an outer surface on which said seats (3) are obtained and spaced from said zones (25); in the retaining configuration said contact surfaces (23) of the movable portion (21) facing the outer surface of the central body (2) and defining the housing volume (12) in collaboration with said outer surface.

5. Device (1) according to the preceding claim, wherein said retaining element (15) further comprises a bracket (16) extending radially from the outer surface of the central body (2); said movable portion (21) being rotatably associated with one end of the bracket (16) distal from said outer surface.

6. Device (1) according to the preceding claim, wherein said bracket (16) comprises respective opposing surfaces (16a) defining respective housing volumes (12) of two adjacent seats (3), each surface (16a) having a curved conformation so as to be at least partially counter-shaped to the outer surface of the sonobuoy (10).

7. Device (1) according to any one of claims 3 to 6, wherein said contact surfaces (23) of the movable element (21) are curved so as to be at least partially counter-shaped to the outer surface of the sonobuoy (10).

8. Device (1) according to any one of the preceding claims, wherein at least one pair of retaining elements (15a, 15b), interposed between adjacent seats (3), have respective movable portions (21) and brackets (16) abuttable on opposite sides of a sonobuoy (10) interposed between said elements (15a, 15b).

9. Device (1) according to any one of the preceding claims, wherein the support system (7) is positioned at the lower end of each portion (4, 5) of the carousel.

10. Device (1) according to any one of the preceding claims, wherein said support system (7) comprises a projecting support member (31) movable between a use condition, in which it projects transversely from the carousel to support the respective sonobuoy (10), and a release condition, in which it is retracted outside the housing volume (12).

11. Device (1) according to any one of the preceding claims, wherein each seat (3) further comprises at least an upper support system (35) abuttable against an upper end of the sonobuoy (10) in order to retain the sonobuoy itself against the support system (7) positioned below each portion (4, 5).

12. Device (1) according to the preceding claim, wherein the upper support system (35) comprises an abutment element (36) and a blocking element (37); wherein the abutment element (36) is rotatable so as to be abutted, when in use, in contact with the sonobuoy (10); wherein the blocking element (37) constrains the abutment element (36) in contact with the sonobuoy (10).

13. Device (1) according to claim 11, wherein the upper support system (35) of the upper portion (5) is a pressure system (39) disposed between two adjacent seats (3) and rotatable so as to be in contact from above with a respective sonobuoy (10).

14. Device (1) according to any one of the preceding claims, comprising an auxiliary upper support system (45) connected to the upper end of the carousel; wherein said auxiliary system (45) comprises a support element (46) and a closure element (49); wherein the support element (46) is a hollow structure, counter-shaped to the upper end of the sonobuoy (10), and projecting from the carousel, said support element (46) being switchable between an open condition, so as to insert the sonobuoy (10) in the respective seat (3), and a closed condition, so as to retain the sonobuoy (10) in said housing volume (12).

15. Device (1) according to any one of the preceding claims, comprising a plurality of sensors (60) distributed in each portion (4, 5) of the containment carousel in order to send input data representative of the presence and of the type of sonobuoy (10) in the respective seat (3).

16. Method for containing and releasing sonobuoys, comprising the steps of
- providing a rotatable carousel having a lower portion (4) and an upper portion (5), each of which endowed with a plurality of housing seats (3) for respective sonobuoys (10);
- providing, for each seat (3), a plurality of retaining elements (15) switchable between a retaining configuration and an access configuration;
- switching said retaining elements (15) into the access configuration to the seat (3) in order to house a sonobuoy (10) in said seat (3);
- housing the sonobuoy (10) in said seat (3), supporting it from below by means of a support system (7);
**characterised in that** it further comprises a step of switching said retaining elements (15) into the retaining configuration in order to laterally retain the sonobuoy (10) inside a housing volume (12) of the seat (3).

17. Method according to the preceding claim, further comprising the step of supporting the sonobuoy (10) from above by means of an upper support system (35) or by means of an auxiliary support system (45).

18. Method according to one of the preceding claims 16 and 17, further comprising the step of sending input data representative of the presence and of the type of sonobuoy (10) in the respective seat (3) by means of a plurality of sensors (60) distributed in each portion (4, 5) of the carousel.

19. Method according to any one of claims 16 to 18, comprising the steps of:
- selecting a sector (61a - 611) of the carousel
wherein said sector (61a - 611) comprises a seat (3) of the lower portion (4) and the respective seat (3) of the upper portion (5);
- receiving a first input data item representative of the presence and of the type of sonobuoy (10) in the respective seat (3) of the lower portion (4) of the selected sector (61a - 611);
- performing a comparison between the first input data item and at least one predefined value;
- rotating the carousel to align the sonobuoy (10) with a launch position in the event of conformity of the first input data item with respect to the predefined value;
- disabling the support system (7) of the lower portion (4) of the selected sector (61a - 61l) to release, by dropping, the sonobuoy (10) housed in the lower portion (4).

20. Method, according to claim 19, comprising the steps of:
- receiving a second input data item representative of the presence and of the type of sonobuoy (10) in the respective seat (3) of the upper portion (5) of the selected sector (61a - 611);
- performing a comparison between the second input data item and at least one predefined value;
- rotating the carousel to align the sonobuoy (10) with said launch position in the event of conformity of the second input data item with respect to the predefined value;
- disabling the support system (7) of the upper portion (5) of the selected sector (61a - 61l) to release, by dropping, the sonobuoy (10) housed in the upper portion (5).

21. Method according to claim 19 or 20, wherein said step of rotating the carousel is carried out as a function of a processed signal representative of the shortest rotation path the carousel must travel in order to position the selected sector (61a - 611) in correspondence with the launch position.
